# FASCICULE DE BREVET EUROPEEN

(11) **EP 2 182 230 B1**
(45) Date de publication et mention de la délivrance du brevet: **25.02.2015**
(21) Numéro de dépôt: 09174351.8
(22) Date de dépôt: 28.10.2009
(51) Int. Cl.: F16C 32/04, H02K 5/128

(54) **Palier magnétique axial chemisé**
Axiales Magnetlager mit Verkleidung
Canned axial magnetic bearing

(30) Priorité: 03.11.2008 FR 0857455
(43) Date de publication de la demande: 05.05.2010
(73) Titulaire: SKF MAGNETIC MECHATRONICS, 27950 Saint-Marcel (FR)
(72) Inventeur: Baudelocque, Luc, 27200, VERNON (FR); Brunet, Maurice, 27950, SAINTE COLOMBE PRES VERNON (FR); Moulin, David, 75015, PARIS (FR)
(74) Mandataire: Thévenet, Jean-Bruno

(56) Documents cités:
- EP-A1- 1 137 126
- EP-A1- 1 830 081
- EP-A2- 1 967 286
- US-A- 3 223 043
- US-A- 5 698 917
- US-A1- 2004 112 800

## Description

### Domaine de l'invention

La présente invention concerne un palier magnétique axial chemisé pour machine tournante équipée d'un rotor en contact avec une atmosphère gazeuse corrosive, acide ou porteuse de particules.

### Art antérieur

On a déjà décrit, par exemple dans le document EP 1 830 081 A1, un palier magnétique actif chemisé qui peut être appliqué à un palier radial ou un palier axial. Un tel type de palier chemisé est destiné à travailler dans des ambiances sales ou corrosives.

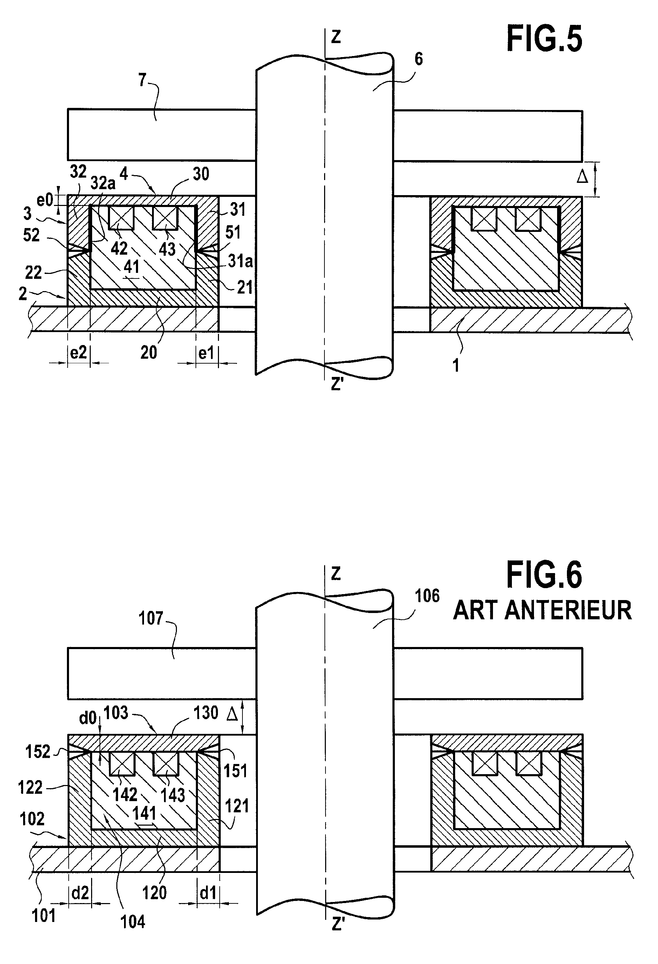

La figure 6 montre un exemple de palier axial chemisé connu qui comprend une armature rotorique 107 en forme de disque solidaire d'un rotor 106 et placée dans une atmosphère gazeuse corrosive, acide ou porteuse de particules.

Un induit de stator 104 solidaire d'un dispositif de support fixe 101 est placé en regard de l'armature rotorique 107. L'induit de stator 104 comprend au moins un bobinage 142, 143 et un corps ferromagnétique 141 placés dans une enceinte de protection métallique 102, 103.

L'enceinte de protection 102, 103 comprend un support annulaire 102 qui comprend une paroi de fond 120 et des parois latérales interne et externe 121, 122 présentant des épaisseurs d1, d2 de plusieurs millimètres et s'étendant sur toute la hauteur du corps ferromagnétique 141.

Une chemise 103 en forme de plaque présentant une épaisseur d0 est rapportée sur le support annulaire 102 et est soudée par des zones de soudure 151, 152 sur les extrémités libres des parois latérales interne et externe 121, 122 du support annulaire 102.

Le support annulaire 102 peut être en un matériau inoxydable tel que par exemple un acier inoxydable magnétique, notamment du type 17-4 PH. La chemise 103 ou plaque de fermeture peut être réalisée dans le même matériau que le support annulaire 102, par exemple en acier inoxydable 17-4 PH, ou être réalisée en un matériau métallique différent, tel que par exemple de l'inconel.

La chemise 103 est soudée par soudage laser, bombardement électronique ou soudage TIG, au support annulaire 102.

Le fonctionnement du palier n'est pas optimum si l'épaisseur d0 de la chemise 103 est trop importante, car la distance entre l'induit de stator 104 et l'armature rotorique 107 est trop importante et la capacité d'attraction du palier est alors trop limitée.

Il est donc souhaitable que l'épaisseur d0 de la chemise 103 soit réduite et que la chemise 103 soit constituée par une tôle fine, typiquement de 0,5 mm d'épaisseur. Toutefois, ceci pose des problèmes de conception délicats.

Il est à noter que si l'utilisation de paliers chemisés permet de travailler dans des ambiances sales ou corrosives, leur utilisation en fonctionnement pressurisé nécessite une herméticité parfaite dans le temps afin de s'affranchir de problèmes liés à la décompression (dépressurisation explosive, déformation par gonflement).

La réalisation d'un palier axial chemisé introduit ainsi des limites spécifiques à la géométrie. Le chemisage par une tôle fine (typiquement d'épaisseur 0,5 mm) et plate de grande dimension (car par exemple une butée axiale de 45 000 N a typiquement un diamètre externe de 470 mm et un diamètre interne de 270 mm) crée une grande sensibilité du montage aux différents coefficients de dilatation thermique des matériaux mis en jeu.

Bien que les matériaux en présence soient choisis pour avoir des coefficients de dilatation thermique égaux, la méthode de fabrication et d'usinage peut avoir une influence significative.

A titre d'exemple, une plaque d'acier inoxydable 17-4 PH ou d'inconel (qui sont des matériaux typiquement utilisés pour le chemisage des paliers) fortement laminée peut avoir des coefficients de dilatation différents d'un support massif de même nature.

D'autre part, sous l'effet de la température et de la pression ambiante, les soudures liant la chemise en forme de plaque au support massif peuvent être soumises à des contraintes importantes si les différents éléments ne se dilatent ou ne se contractent pas de manières identiques.

Lorsque la tôle de fermeture se dilate plus que le support, même avec des valeurs aussi faibles qu'environ 5 µm, la tôle est mise en compression et se déforme jusqu'à être susceptible de toucher le rotor (par suite d'un bombé de déformation qui peut atteindre par exemple 0,6 ou 0,7 mm pour les 5 µm de déformation appliqués à la butée de 45000 N précitée), du fait que l'entrefer Δ a généralement des valeurs de l'ordre de 0,4 à 1,2 mm. Dans un même temps les soudures reliant la tôle au support sont mises en contrainte.

Lorsque le stator se dilate plus que la tôle de fermeture, les soudures tirent sur la tôle et sont donc mises en contraintes de traction.

Par ailleurs le document EP 1 137 126 A décrit un palier magnétique axial chemisé pour machine tournante équipée d'un rotor en contact avec une atmosphère gazeuse corrosive, ayant les caractéristiques du préambule de la revendication 1, dans lequel des enceintes de protection métalliques en forme de disque annulaire sont soudées aux induits du stator en formant des parois de fermeture présentant une épaisseur faible.

### Définition et objet de l'invention

La présente invention vise à remédier aux inconvénients précités et à permettre de tolérer, dans un palier magnétique axial chemisé, des coefficients de dilatation légèrement différents entre une chemise constituée par une tôle de relativement faible épaisseur et son support, sans pour cela mettre les soudures de liaison en contraintes excessives, ni risquer que la chemise se déforme jusqu'à venir toucher l'armature rotorique du palier.

Ces buts sont atteints, conformément à l'invention, grâce à un palier magnétique axial chemisé pour machine tournante équipée d'un rotor en contact avec une atmosphère gazeuse corrosive, acide ou porteuse de particules, comprenant une armature rotorique en forme de disque solidaire du rotor et placée dans ladite atmosphère gazeuse et un induit de stator solidaire d'un dispositif de support fixe et placé en regard de ladite armature rotorique, l'induit de stator comprenant au moins un bobinage et un corps ferromagnétique placés dans une enceinte de protection métallique, **caractérisé en ce que** ladite enceinte de protection comprend d'une part un support annulaire à profil en U avec une paroi de fond, et des parois latérales interne et externe présentant une épaisseur de plusieurs millimètres et une longueur inférieure à celle de l'induit de stator et d'autre part une chemise annulaire en forme de coiffe à profil en U usinée dans la masse et donc sans soudure, avec des parois latérales interne et externe présentant une épaisseur de plusieurs millimètres et une paroi de fermeture présentant une épaisseur plus faible que celle des parois latérales interne et externe, les extrémités libres des parois latérales interne et externe de la chemise étant soudées aux extrémités libres des parois latérales interne et externe dudit support annulaire.

On obtient ainsi une surface de faible épaisseur e0 n'ayant aucune soudure sensible aux contraintes thermiques ou autres.

Selon un mode particulier de réalisation possible, la chemise annulaire est frettée sur le corps ferromagnétique, ce qui permet de prendre en compte des différences de coefficient de dilatation.

Dans ce cas, il est avantageux que la chemise annulaire présente un coefficient de dilatation légèrement inférieur à celui du corps ferromagnétique, ce qui permet une tension sur la chemise quand la température augmente.

Selon un autre mode de réalisation possible, la chemise annulaire comprend des gorges de souplesse formées dans les parois latérales interne et externe, ce qui permet de libérer des contraintes au niveau des soudures.

Selon encore une autre caractéristique avantageuse de la présente invention, le palier comprend au moins des premier et deuxième joints toriques disposés de part et d'autre de la soudure entre la paroi latérale interne de la chemise et la paroi latérale interne du support annulaire et des troisième et quatrième joints toriques disposés de part et d'autre de la soudure entre la paroi latérale externe de la chemise et la paroi latérale externe du support annulaire.

Dans ce cas, avantageusement, chacun desdits premier, deuxième, troisième et quatrième joints toriques comprend deux joints constituant une double étanchéité.

Les joints toriques permettent l'installation d'une seconde barrière d'herméticité et compensent les défauts susceptibles d'apparaître en cas de réalisation de soudures non complètement hermétiques.

### Brève description des dessins

D'autres caractéristiques et avantages de l'invention ressortiront à la lecture de la description suivante de modes particuliers de réalisation de l'invention, donnés à titre d'exemples, en référence aux dessins annexés, sur lesquels :
- la figure 1 est une vue en coupe axiale selon la ligne I-I de la figure 2, d'un premier exemple de réalisation d'un palier magnétique axial chemisé selon l'invention ;
- la figure 2 est une vue en coupe radiale selon la ligne II-II de la figure 1 ;
- la figure 3 est une vue en demi-coupe axiale d'un deuxième exemple de réalisation d'un palier magnétique axial chemisé selon l'invention ;
- la figure 4 est une vue en demi-coupe axiale d'un troisième exemple de réalisation d'un palier magnétique axial chemisé selon l'invention ;
- la figure 5 est une vue en coupe axiale d'un quatrième exemple de réalisation d'un palier magnétique axial chemisé selon l'invention ; et
- la figure 6 est une vue en coupe axiale d'un palier magnétique axial chemisé selon l'art antérieur.

### Description détaillée des modes de réalisation préférentiels

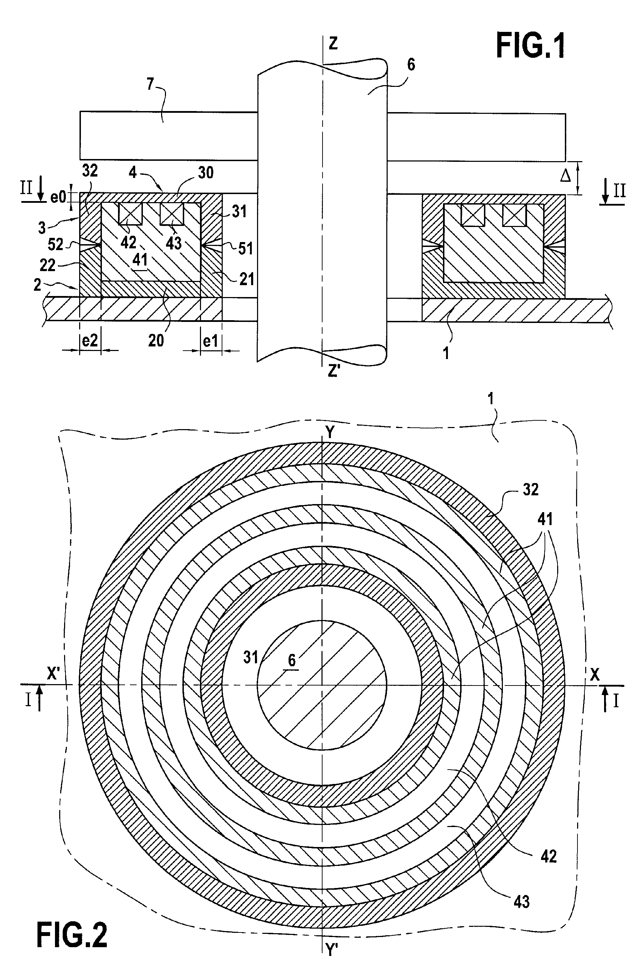

On a représenté sur les figures 1 et 2 un premier exemple de réalisation d'un palier magnétique axial chemisé selon la présente invention.

Ce palier axial comprend un induit de stator 4 comprenant de façon classique un ou deux bobinages annulaires 42, 43 et un corps ferromagnétique 41, l'induit de stator 4 étant placé en regard d'une armature rotorique 7 solidaire d'un arbre tournant 6 d'axe ZZ'. Le corps ferromagnétique 41 peut être massif ou localement feuilleté.

L'induit de stator 4 est placé dans une enceinte de protection métallique étanche 2, 3 qui est elle-même solidaire d'un organe de support fixe 1.

L'induit de stator 4 et son enceinte de protection 2, 3 définissent un entrefer Δ par rapport à l'armature rotorique 7. L'entrefer Δ peut être compris entre 0,4 et 1,5 mm, et de préférence entre 0,4 et 1,2 mm.

L'enceinte de protection de l'induit de stator 4 comprend en premier lieu un support annulaire 2 à profil en U avec une paroi de fond 20 et des parois latérales interne 21 et externe 22. Les parois latérales interne 21 et externe 22 présentent respectivement des épaisseurs e1, e2 de plusieurs millimètres chacune, par exemple entre 3 et 10 mm, et une longueur selon la direction de l'axe ZZ' de l'arbre tournant 6 qui est inférieure à la longueur du corps ferromagnétique 41 de l'induit de stator 4.

L'enceinte de protection de l'induit de stator 4 comprend en second lieu une chemise 3 annulaire en forme de coiffe à profil en U usinée dans la masse, avec une paroi de fermeture 30 présentant une épaisseur e0 inférieure à l'épaisseur des parois latérales interne 31 et externe 32 qui présentent des épaisseurs e1 et e2 respectivement de plusieurs millimètres qui sont sensiblement égales aux épaisseurs des parois latérales interne 21 et externe 22 du support annulaire 2, sans être nécessairement identiques.

Les extrémités libres des parois latérales interne 31 et externe 32 de la chemise 3 sont soudées aux extrémités libres des parois latérales interne 21 et externe 22 du support annulaire 2. Les zones de soudage 51, 52 sont ainsi réalisées entre des pièces d'épaisseur de plusieurs millimètres, les épaisseurs e1 et e2 étant avantageusement supérieures à 3 mm.

Les soudures 51, 52 entre la chemise 3 et le support annulaire 2 peuvent être réalisées par exemple par soudage laser, bombardement électronique ou encore soudage TIG.

La paroi 30 de fermeture de la chemise annulaire 3 présente de préférence une épaisseur réduite, inférieure à celle des parois latérales 31, 32 et qui peut être comprise entre 0,3 et 2 mm, et de préférence entre 0,4 et 1 mm afin de ne pas trop augmenter la distance entre l'induit ferromagnétique 41 et l'armature rotorique 7.

Le support annulaire 2 et la chemise 3 peuvent être réalisés par exemple en un acier inoxydable magnétique, notamment de type 17-4 PH, mais d'autres matériaux sont également possibles. Par ailleurs, le matériau de la chemise 3 peut aussi être différent de celui du support annulaire 2. Ainsi, la chemise 3 peut être réalisée par exemple en inconel.

Dans ce montage selon l'invention, la chemise 3 constituant la tôle de fermeture a une forme de U. Ce U a été usiné dans la masse d'un matériau de plus forte épaisseur (obtenu ou non par le même procédé que le matériau du support annulaire 2).

Le plat de la face active (face extérieure de la paroi 30) est usiné par un usinage fin permettant de limiter au maximum le changement de caractéristiques des matériaux jusqu'à l'obtention de l'épaisseur désirée e0 (typiquement 0,5 mm).

Les jambes 31, 32 du U sont usinées pour avoir une épaisseur e1, e2 beaucoup plus importante et la soudure de l'ensemble sur son support 2 est réalisée à la base du U permettant la mise en oeuvre de soudures 51, 52 beaucoup plus épaisses (typiquement 5 mm au lieu de 0,5 mm) garantissant une bien meilleure robustesse et bien meilleure herméticité qu'avec des réalisations nécessitant la soudure de matériaux de faible épaisseur telles que celles connues dans l'art antérieur.

De plus, la chemise 3 en forme de U peut être insérée sur le support ferromagnétique 41 par frettage de quelques dizaines de µm afin de prendre en compte la petite différence de coefficient de dilatation thermique et ainsi mettre en précontraintes la chemise 3 (voir le mode de réalisation de la figure 5 avec des zones de frettage 31a, 32a créées au voisinage des jambes 31, 32 de la chemise 3). Dans ce cas, la chemise 3 présente de préférence un coefficient de dilatation inférieur à celui du corps ferromagnétique 41.

De plus, la localisation des soudures 51, 52 de façon déportée à la base des jambes 31, 32 de la chemise 3, permet de modifier le chargement mécanique de la soudure de façon à soulager les sollicitations de celle-ci et ainsi garantir son intégrité. Aucune soudure de matériaux de faible épaisseur ne travaille alors en traction-compression directe. Les longueurs des jambes 31, 32 de la chemise 3 influencent alors directement le chargement des soudures 51, 52 en démultipliant l'angle de rotulage. Les jambes 31, 32 du U doivent donc être suffisamment longues pour minimiser les contraintes dans les soudures 51, 52 dues aux différentes dilatations et contractions.

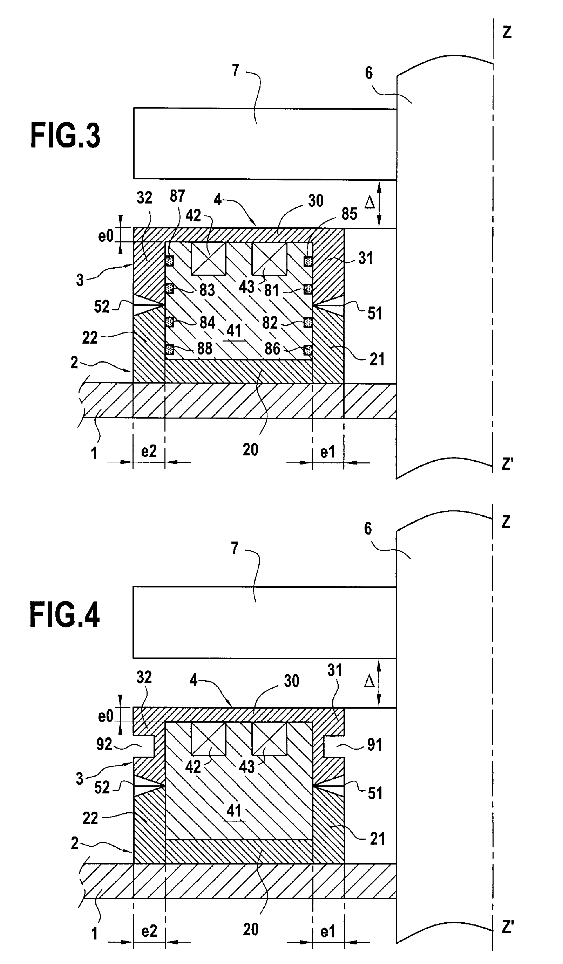

De plus, des joints toriques de type O'Ring 81 à 88 peuvent être facilement ajoutés afin soit de rendre l'herméticité de la soudure 51, 52 non fonctionnelle ou non nécessaire, soit de mettre une double barrière d'étanchéité (voir le mode de réalisation de la figure 3).

Comme on l'a représenté sur la figure 3, selon un mode de réalisation avantageux, au moins des joints toriques 81, 82 sont disposés de part et d'autre de la soudure 51 entre la paroi latérale interne 31 de la chemise 3 et la paroi latérale interne 21 du support annulaire 2. De façon similaire au moins des joints toriques 83, 84 sont disposés de part et d'autre de la soudure 52 entre la paroi latérale externe 32 de la chemise 3 et la paroi latérale externe 22 du support annulaire 2.

Avantageusement, comme représenté sur la figure 3, on peut disposer deux joint toriques 81, 85 ; 82, 86 ; 83, 87 ; 84, 88 de part et d'autre de chaque soudure 51, 52, afin de former une double étanchéité.

De façon optionnelle, comme représenté sur la figure 4, la chemise annulaire 3 peut comprendre des gorges de souplesse 91, 92 formées dans les parois latérales interne 31 et externe 32 respectivement.

Les gorges de souplesse 91, 92 permettent de libérer les contraintes au niveau des soudures 51, 52.

Naturellement, les différents modes de réalisation décrits sur les figures 1, 3, 4 et 5 peuvent se combiner entre eux.

De même, un deuxième induit de stator 4 avec une enveloppe 2, 3 conforme à l'invention pourrait être disposé de façon symétrique par rapport à l'armature rotorique 7 de manière à former une butée axiale à double effet.

On n'a pas décrit dans la présente demande les détecteurs de position, ni les circuits d'alimentation du palier magnétique axial actif chemisé, car ces éléments sont classiques et indépendants du mode de réalisation de l'enveloppe 2, 3.

## Revendications

1. Palier magnétique axial chemisé pour machine tournante équipée d'un rotor (6) en contact avec une atmosphère gazeuse corrosive, acide ou porteuse de particules, comprenant une armature rotorique (7) en forme de disque solidaire du rotor (6) et placée dans ladite atmosphère gazeuse et un induit de stator (4) solidaire d'un dispositif de support fixe (1) et placé en regard de ladite armature rotorique (7), l'induit de stator (4) comprenant au moins un bobinage (42, 43) et un corps ferromagnétique (41) placés dans une enceinte de protection (2,3) métallique, **caractérisé en ce que** ladite enceinte de protection (2, 3) comprend d'une part un support annulaire (2) à profil en U avec une paroi de fond (20), et des parois latérales interne et externe (21, 22) présentant une épaisseur de plusieurs millimètres et une longueur inférieure à celle de l'induit de stator (4) et d'autre part une chemise (3) annulaire en forme de coiffe à profil en U usinée dans la masse et donc sans soudure, avec des parois latérales interne et externe (31, 32) et une paroi de fermeture (30) présentant une épaisseur (e0) plus faible que celle (e1, e2) des parois latérales interne et externe (31, 32), les extrémités libres des parois latérales interne et externe (31, 32) de la chemise (3) étant soudées aux extrémités libres des parois latérales interne et externe (21, 22) dudit support annulaire (2).

2. Palier selon la revendication 1, **caractérisé en ce que** la chemise annulaire (3) est frettée sur ledit corps ferromagnétique (41).

3. Palier selon la revendication 1 ou la revendication 2, **caractérisé en ce que** la chemise annulaire (3) comprend des gorges de souplesse (91, 92) formées dans les parois latérales interne et externe (31, 32).

4. Palier selon l'une quelconque des revendications 1 à 3, **caractérisé en ce qu'**il comprend au moins des premier et deuxième joints toriques (81, 82) disposés de part et d'autre de la soudure (51) entre la paroi latérale interne (31) de la chemise (3) et la paroi latérale interne (21) du support annulaire (2) et des troisième et quatrième joints toriques (83, 84) disposés de part et d'autre de la soudure (52) entre la paroi latérale externe (32) de la chemise (3) et la paroi latérale externe (22) du support annulaire (2).

5. Palier selon la revendication 4, **caractérisé en ce que** chacun desdits premier, deuxième, troisième et quatrième joints toriques (81, 85 ; 82, 86 ; 83, 87 ; 84, 88) comprend deux joints constituant une double étanchéité.

6. Palier selon l'une quelconque des revendications 1 à 5, **caractérisé en ce que** la chemise annulaire (3) et le support annulaire (2) sont en acier inoxydable magnétique du type 17-4 PH ou en inconel.

7. Palier selon l'une quelconque des revendications 1 à 6, **caractérisé en ce que** la paroi de fermeture (30) de la chemise annulaire (3) présente une épaisseur (e0) comprise entre 0,3 et 2 mm.

8. Palier selon l'une quelconque des revendications 1 à 7, **caractérisé en ce que** les soudures (51, 52) entre la chemise (3) et le support annulaire (2) sont réalisées sur des parois présentant une épaisseur supérieure à 3 mm.

9. Palier selon l'une quelconque des revendications 1 à 8, **caractérisé en ce que** les soudures (51, 52) entre la chemise (3) et le support annulaire (2) sont réalisées par soudage laser, bombardement électronique ou soudage TIG.

10. Palier selon l'une quelconque des revendications 1 à 9, **caractérisé en ce que** l'entrefer (Δ) entre l'armature rotorique (7) et l'induit de stator (4) est compris entre 0,4 et 1,2 mm.

11. Palier selon la revendication 2, **caractérisé en ce que** la chemise annulaire (3) présente un coefficient de dilatation inférieur à celui du corps ferromagnétique (41).

## Patentansprüche

1. Ummanteltes axiales Magnetlager für eine umlaufende Maschine, die mit einem mit einer gashaltigen korrosiven, sauren oder partikeltragenden Atmosphäre in Kontakt befindlichen Rotor (6) ausgestattet ist, umfassend einen scheibenförmigen Rotoranker (7), welcher mit dem Rotor (6) fest verbunden und in der gashaltigen Atmosphäre angeordnet ist, sowie einen Statoranker (4), der mit einer festen Tragvorrichtung (1) fest verbunden und gegenüber dem Rotoranker (7) gelegen ist, wobei der Statoranker (4) wenigstens eine Wicklung (42, 43) und einen ferromagnetischen Körper (41) umfasst, die in einem metallischen Schutzraum (2, 3) angeordnet sind, **dadurch gekennzeichnet, dass** der Schutzraum (2, 3) einerseits einen ringförmigen Träger (2) mit U-förmigem Profil mit einer Bodenwand (20) und einer inneren und einer äußeren Seitenwand (21, 22), die eine Dicke von mehreren Millimetern und eine geringere Länge als der Statoranker (4) aufweisen, sowie andererseits einen ringförmigen Mantel (3) in Form einer aus dem vollen gearbeiteten und folglich schweißnahtfreien Abdeckung mit U-förmigem Profil, mit einer inneren und einer äußeren Seitenwand (31, 32) und einer Verschlusswand (30), die eine Dicke (e0) aufweist, welche geringer als diejenige (e1, e2) der inneren und der äußeren Seitenwand (31, 32) ist, umfasst, wobei die freien Enden der inneren und der äußeren Seitenwand (31, 32) des Mantels (3) an die freien Enden der inneren und der äußeren Seitenwand (21, 22) des ringförmigen Trägers (2) geschweißt sind.

2. Lager nach Anspruch 1, **dadurch gekennzeichnet, dass** der ringförmige Mantel (3) auf den ferromagnetischen Körper (41) aufgeschrumpft ist.

3. Lager nach Anspruch 1 oder Anspruch 2, **dadurch gekennzeichnet, dass** der ringförmige Mantel (3) Flexibilitätsnuten (91, 92) umfasst, die in der inneren und der äußeren Seitenwand (31, 32) ausgebildet sind.

4. Lager nach einem der Ansprüche 1 bis 3, **dadurch gekennzeichnet, dass** es wenigstens einen ersten und einen zweiten O-Ring (81, 82), die auf beiden Seiten der Schweißnaht (51) zwischen der inneren Seitenwand (31) des Mantels (3) und der inneren Seitenwand (21) des ringförmigen Trägers (2) angeordnet sind, sowie einen dritten und einen vierten O-Ring (83, 84), die auf beiden Seiten der Schweißnaht (52) zwischen der äußeren Seitenwand (32) des Mantels (3) und der äußeren Seitenwand (22) des ringförmigen Trägers (2) angeordnet sind.

5. Lager nach Anspruch 4, **dadurch gekennzeichnet, dass** ein jeder der ersten, zweiten, dritten und vierten O-Ringe (81, 85; 82, 86; 83, 87; 84, 88) zwei eine zweifache Dichtigkeit herstellende Dichtungen umfasst.

6. Lager nach einem der Ansprüche 1 bis 5, **dadurch gekennzeichnet, dass** der ringförmige Mantel (3) und der ringförmige Träger (2) aus rostfreiem, magnetischem Stahl vom Typ 17-4 PH oder aus Inconel bestehen.

7. Lager nach einem der Ansprüche 1 bis 6, **dadurch gekennzeichnet, dass** die Verschlusswand (30) des ringförmigen Mantels (3) eine Dicke (e0) zwischen 0,3 und 2 mm aufweist.

8. Lager nach einem der Ansprüche 1 bis 7, **dadurch gekennzeichnet, dass** die Schweißnähte (51, 52) zwischen dem Mantel (3) und dem ringförmigen Träger (2) an Wänden mit einer Dicke von mehr als 3 mm ausgebildet sind.

9. Lager nach einem der Ansprüche 1 bis 8, **dadurch gekennzeichnet, dass** die Schweißnähte (51, 52) zwischen dem Mantel (3) und dem ringförmigen Träger (2) durch Laserschweißen, Elektronenbeschuss oder WIG-Schweißen ausgebildet sind.

10. Lager nach einem der Ansprüche 1 bis 9, **dadurch gekennzeichnet, dass** der Luftspalt (Δ) zwischen dem Rotoranker (7) und dem Statoranker (4) zwischen 0,4 und 1,2 mm beträgt.

11. Lager nach Anspruch 2, **dadurch gekennzeichnet, dass** der ringförmige Mantel (3) einen Ausdehnungskoeffizienten, der geringer als derjenige des ferromagnetischen Körpers (41) ist, aufweist.

## Claims

1. A jacketed axial magnetic bearing for a rotary machine having a rotor (6) in contact with a gaseous atmosphere that is corrosive, acid, or carrying particles, the bearing comprising a rotor armature (7) in the form of a disk secured to the rotor (6) and placed in said gaseous atmosphere, and a stator magnetic circuit (4) secured to a stationary support device (1) and placed facing said rotor armature (7), the magnetic circuit of the stator (4) comprising at least one coil (42, 43) and a ferromagnetic body (41) placed in a metallic protective enclosure (2, 3), the bearing being **characterized in that** said protective enclosure (2, 3) comprises firstly an annular support (2) of channel section with a web (20) and inner and outer flanges (21, 22) presenting a thickness of several millimeters and a length that is less than the length of the stator magnetic circuit (4), and secondly an annular jacket (3) in the form of a channel-section cover machined from a solid piece and thus without welds, the jacket having inner and outer flanges (31, 32) and a closure web (30) presenting a thickness (e0) smaller than the thicknesses (e1, e2) of the inner and outer flanges (31, 32), the free ends of the inner and outer flanges (31, 32) of the jacket (3) being welded to the free ends of the inner and outer flanges (21, 22) of said annular support (2).

2. A bearing according to claim 1, **characterized in that** the annular jacket (3) is shrink-fitted on said ferromagnetic body (41).

3. A bearing according to claim 1 or claim 2, **characterized in that** the annular jacket (3) includes flexibility grooves (91, 92) formed in the inner and outer flanges (31, 32).

4. A bearing according to any one of claims 1 to 3, **characterized in that** it includes at least first and second O-rings (81, 82) disposed on either side of the weld (51) between the inner flange (31) of the jacket (3) and the inner flange (21) of the annular support (2), and third and fourth O-rings (83, 84) disposed on either side of the weld (52) between the outer flange (32) of the jacket (3) and the outer flange (22) of the annular support (2).

5. A bearing according to claim 4, **characterized in that** each of said first, second, third, and fourth O-rings (81, 85; 82, 86; 83, 87; 84, 88) comprises a pair of O-rings providing double sealing.

6. A bearing according to any one of claims 1 to 5, **characterized in that** the annular jacket (3) and the annular support (2) are made of magnetic stainless steel of the 17-4 PH type, or of Inconel.

7. A bearing according to any one of claims 1 to 6, **characterized in that** the closure web (30) of the annular jacket (3) presents thickness (e0) lying in the range 0.3 mm to 2 mm.

8. A bearing according to any one of claims 1 to 7, **characterized in that** the welds (51, 52) between the jacket (3) and the annular support (2) are formed on walls presenting thickness greater than 3 mm.

9. A bearing according to any one of claims 1 to 8, **characterized in that** the welds (51, 52) between the jacket (3) and the annular support (2) are made by laser welding, by electron bombardment, or by TIG welding.

10. A bearing according to any one of claims 1 to 9, **characterized in that** the airgap (Δ) between the rotor armature (7) and the stator magnetic circuit (4) lies in the range 0.4 mm to 1.2 mm.

11. A bearing according to claim 2, **characterized in that** the annular jacket (3) presents a coefficient of expansion that is smaller than that of the ferromagnetic body (41).
